# EUROPÄISCHE PATENTANMELDUNG

(11) **EP 1 172 252 A1**
(43) Veröffentlichungstag der Anmeldung: **16.01.2002**
(21) Anmeldenummer: 01117053.7
(22) Anmeldetag: 13.07.2001
(51) Int. Cl.: B60N 3/00

(54) **Versenkbarer Klapptisch**

(30) Priorität: 15.07.2000 DE 10034477
(71) Anmelder: Schneppendahl, Marlene, 53721 Siegburg (DE)
(72) Erfinder: Schneppendahl, Marlene, 53721 Siegburg (DE)
(74) Vertreter: Müller-Wolff, Thomas, Dipl.-Ing.

(57) **Zusammenfassung**

Die Erfindung betrifft einen versenkbaren Klapptisch für Fahrzeuge, insbesondere für Flugzeuge mit Komfortsitzen, wobei eine Armlehne als Staufach (20) ausgebildet ist, in die der zusammengelegte Klapptisch versenkbar ist. Der Klapptisch besteht aus mindestens drei miteinander über Gelenke verbundene Segmentflächen (23,24) mit abgestufter Oberfläche, die im ausgeklappten Zustand gemeinsam eine rechteckförmige Vertiefung in der Klapptischmitte zur Aufnahme eines Tabletts oder dergleichen bilden, wobei die Segmentflächen in ihrer horizontalen Lage gesichert (28) werden.

## Beschreibung

Die Erfindung betrifft einen versenkbaren Klapptisch für Fahrzeuge, insbesondere für Flugzeuge mit Komfortsitzen.

Die bisher in Fahrzeugen oder Flugzeugen verwendeten Klapptische sind in der Fläche zu klein, in der Handhabung unpraktisch und weisen nicht die gebotene Sicherheit, insbesondere bei Turbulenzen im Flugbetrieb, auf. Der heutzutage bei Fahrzeugen, insbesondere bei Flugzeugen, erreichte Komfortanspruch läßt Defizite im Einsatzbereich oder im Komfortbereich nicht zu. Dies betrifft insbesondere eine sichere Ablage aller Gegenstände, die bei der Verpflegung an Bord erforderlich sind, wie z.B. Trink- und Eßgefäße, Bestecke, gefüllte und entleerte Nahrungsbehälter etc. Unter diesen Defiziten leidet nicht nur die Sicherheit, z.B. beim Verschütten heißer Getränke oder durch herumfliegende Bestecke, sondern auch die Hygiene und das Komfortempfinden der Passagiere werden hierdurch beeinträchtigt. Eine fehlende Unterbringung für entleerte Nahrungsbehälter oder gebrauchte Servietten etc. ist aus optischen und hygienischen Gründen problematisch. Auch für das Servicepersonal ist der Kontakt mit den entleerten Behältern, den Abfällen und beschmutzten Servietten etc. unakzeptabel.

Es stellt sich daher die Aufgabe, einen versenkbaren Klapptisch für Fahrzeuge, insbesondere Flugzeuge mit Komfortsitzen, zu entwickeln, der die vorbenannten Nachteile nicht aufweist und selbst unter turbulenten Flugbedingungen eine sichere und den Genuß fördernde Unterbringung aller zum Verzehr erforderlichen Gegenstände, wie Trink- und Eßbehälter, Bestecke etc., ermöglicht und der ferner auf die verschiedenen Einbauverhältnisse und die individuellen Bedürfnisse der Benutzer einstellbar ist.

Diese Aufgabe wird erfindungsgemäß durch die in den Patentansprüchen angegebenen Merkmale gelöst. Es hat sich gezeigt, daß eine Armlehne als Staufach ausgebildet werden kann, in die ein zusammengelegter Klapptisch leicht versenkbar ist. Der Klapptisch sollte aus mindestens drei miteinander über Gelenke verbundene Segmentflächen mit abgestufter Oberfläche bestehen, wobei die Segmentflächen im ausgeklappten Zustand gemeinsam eine rechteckförmige Vertiefung in der Klapptischmitte zur Aufnahme eines Tabletts bilden. Die Segmentflächen werden in ihrer horizontalen Lage über eine seitlich oder unterhalb des Klapptisches angeordnete Teleskopschiene in ausgeklappter Stellung gesichert.

Vorzugsweise beträgt die Vertiefung in den Segmentflächen zwischen 1,5 und 3 mm, wobei noch eine rutschfeste Einlage aus Gummi, Kunststoff oder dergleichen in der Vertiefung angeordnet sein kann. Durch diese rutschfeste Einlage wird die Haftung eines Tabletts oder Behälters in der Vertiefung noch verstärkt, so daß auch bei unterschiedlichen Tablett oder Behälter größen stets eine hohe Standfestigkeit erreicht wird.

An mindestens einer Segmentfläche sollte vorzugsweise an dem zum Fußraum hinweisenden Tischrand ein Haken oder eine Klammer zur Befestigung von Abfalltüten, Verpackungsresten oder dergleichen angeordnet sein. Es ist weiterhin vorgesehen, daß der Haken oder die Klammer vom Rand der Segmentfläche ausziehbar, ausklappbar oder ausschwenkbar ist, so daß keine Verletzungsgefahr und auch eine leichtere Verstaumöglichkeit gegeben ist.

In den Segmentflächen der versenkbaren Klapptische sollten zusätzliche Vertiefungen oder Aussparungen für Tassen, Gläser oder Bestecke eingearbeitet sein.Einzelne Teile der Segmente können auch als federbelastetes Greifsegment ausgebildet sein, so dass die Fußenden der Behälter damit festgehalten werden können. Bei der Verwendung von Aussparungen ist daran gedacht, eine elastische Abdeckung, wie z.B. durch einen Beutel am Rand der Aussparung zu befestigen, so daß überschwappende Flüssigkeiten zurückgehalten werden können.

Für das Ausfahren und Versenken des Klapptisches sind mechanische, hydraulische, pneumatische oder elektro-mechanische Antriebsmittel vorgesehen. Diese können entweder über das Bordnetz mit einer geeigneten Energiequelle verbunden sein oder auf unterhalb der Bestuhlung angebrachte Druckbehälter, Batterien oder dergleichen zurückgreifen. Durch Verwendung geeigneter Servotechnik ist die Bedienung der erfindungsgemäßen Klapptische per Knopfdruck möglich.

Im folgenden wird die Erfindung anhand mehrerer Ausführungsbeispiele näher erläutert. Es zeigen:
- Fig. 1: Sitzreihe mit einem erfindungsgemäß ausgerüsteten versenkbaren Klapptisch;
- Fig. 2a-e: Ablaufschema beim Ausklappen eines versenkbaren Klapptisches in Seitenansicht;
- Fig. 3: Prinzipbild zur Sicherung der Segmentflächen eines erfindungsgemäßen Klapptisches in horizontaler Lage.
- Fig.4a-d: Prinzipbild eines höhenverstellbaren Klapptisches.
- Fig. 5: Seitenansicht eines mit horizontal verstellbaren Klapptisch ausgestatteten Komfortsitzes.
- Fig.6a-c: Prinzipbild eines horizontal schwenkbaren Klapptisches

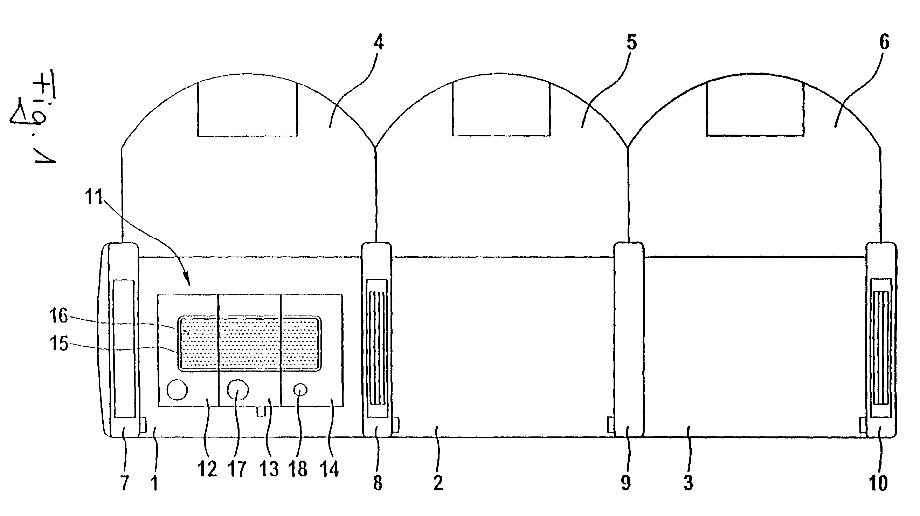

In Figur 1 ist eine Sitzreihe, bestehend aus den Einzelsitzflächen 1, 2, 3 und den Rückenlehnen 4, 5, 6 in Draufsicht dargestellt. Zwischen den Sitzen und an den Außenkanten (zum Gang bereich) der Sitzreihe sind Armlehnen 7, 8, 9, 10 mit Staufächern angeordnet, in die ein zusammengelegter Klapptisch versenkt werden kann.

Oberhalb der Sitzfläche 1 ist ein erfindungsgemäßer Klapptisch 11 in ausgeklapptem Zustand dargestellt. Er besteht aus den Segmentflächen 12, 13, 14, in die eine rechteckförmige Vertiefung 15 eingeformt ist. Diese Vertiefung 15 kann mit einer rutschfesten Einlage 16 zur Aufnahme eines Tabletts (nicht dargestellt) ausgestattet sein.

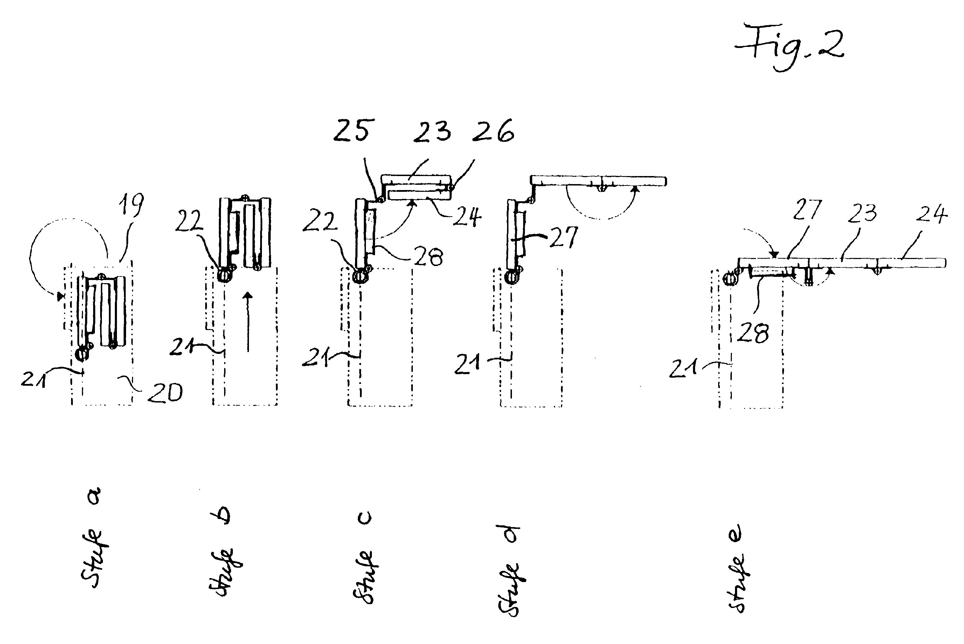

Figur 2 zeigt Querschnitte durch eine mit einem erfindungsgemäß versenkbaren Klapptisch ausgestattete Armlehne. Aus dieser Darstellung wird der Verfahrensablauf beim Ausklappen deutlich, wobei es sich um eine prinzipielle Darstellung mit rein mechanischem Klappmechanismus handelt. Selbstverständlich können die geeigneten Antriebsmittel für eine hydraulische, pneumatische oder elektro-mechanische Steuerung in dem Staufach der Armlehne untergebracht werden.

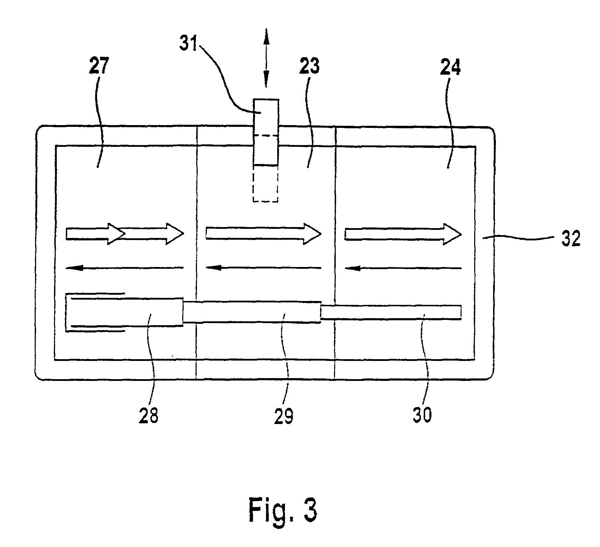

Die Figur 2 zeigt von links nach rechts gesehen das Aufklappen eines Deckels 19 vom Staufach 20 (Stufe a) und das Herausfahren des Klapptisches entlang einer Führungsschiene 21 (Stufe b). Sobald der Klapptisch mit einem an der Führungsschiene 21 befestigten Grundgelenk 22 vollständig aus dem Staufach 20 herausgefahren ist, kann das Aufklappen beginnen. Hierzu werden die außenliegenden Segmentflächen 23, 24 des Klapptisches um die Mittelgelenke 25, 26 um jeweils 90° und 180° geschwenkt (Stufen c, d). Danach kann das in bezug auf die Schwenkbewegung innenliegende Segment 27 um das Grundgelenk 22 in die Horizontale gedreht werden, so daß sich eine ebene Fläche für den Klapptisch ergibt (Stufe e). Die Sicherung des Klapptisches in ausgeklappter Stellung wird gemäß Figur 3 durch eine unterhalb des Tisches angeordnete Teleskopschiene 28 vorgenommen. Diese stützt mit ihren ausfahrbaren Enden 29, 30 die einzelnen Flächensegmente 23, 24, 27 in ihrer ausgeklappten Position.

An der Segmentfläche 23 ist ein Haken 31 befestigt, der in Pfeilrichtung verschieblich ist. Im eingeschobenen Zustand (gestrichelte Linie) wird er von dem Seitenrand 32 verdeckt, so daß keine störenden Einflüsse durch das herausragende Ende des Hakens 31 auftreten können.

Zusammenfassend läßt sich feststellen, daß der Komfort durch den versenkbaren Klapptisch gemäß vorliegender Erfindung wesentlich gesteigert werden kann. Es war bisher nicht möglich, einen Tisch mit einer Mindestbreite von 40 cm in stabiler Lage so anzuordnen, daß auch bei den im Flugbetrieb üblichen Turbulenzen keine Rutschgefahr oder Verletzungsgefahr besteht. Einen zusätzlichen Gewinn an Komfort bietet der erfindungsgemäße Klapptisch dadurch, daß überschwappende Inhalte aus Bechern oder Tellern in den Vertiefungen des Tisches gesammelt und nicht nach unten abfließen können. Zum Säubern verwendete Tücher lassen sich bequem in dafür vorbereitete Abfalltüten verstauen, wobei die gefüllten Tüten an Haken oder Klammern so befestigt werden können, daß sie vom Servicepersonal jederzeit in hygienischer Weise entfernt werden können.

Vorzugsweise sind in den Vertiefungen oder Aussparungen für Tassen, Gläser oder Bestecke zusammensteck- oder faltbare Spiralschläuche oder Ringelemente angeordnet, die nach unten verschlossen und abgedichtet sind. Die Spiralschläuche können nach Art der Abluftschläuche flexibel ausgezogen oder zusammengesteckt werden, so daß sie in den Vertiefungen ohne seitlichen Überstand versenkbar sind. Es lassen sich in den Spiralschläuchen vorteilhaft Behälter unterbringen, deren Inhalt beim Überlaufen oder Verschütten aufgefangen und ggf. über eine Schlauchverbindung in die am Haken 31 aufgehängten Abfalltüten entsorgt werden kann.

Am oberen Rand der Vertiefungen können bewegliche, vorzugsweise federbelastete Segmente angeordet sein. Beim Einstellen von Tassen, Gläsern oder Bestecken in die Vertiefungen oder in die Öffnungen wird dann im Fuß- oder Randbereich ein Form- oder Reibschluss hergestellt, so dass selbst unter turbulenten Bedingungen keine umherfliegenden Teile mehr auftreten können. Eventuell überschwappende Flüssigkeiten werden über die Vertiefungen bzw. Öffnungen in die Spiralschläuche abgeleitet. Nach Beendigung der Reise können die Spiralschläuche leicht entfernt und umweltfreundlich entsorgt werden.

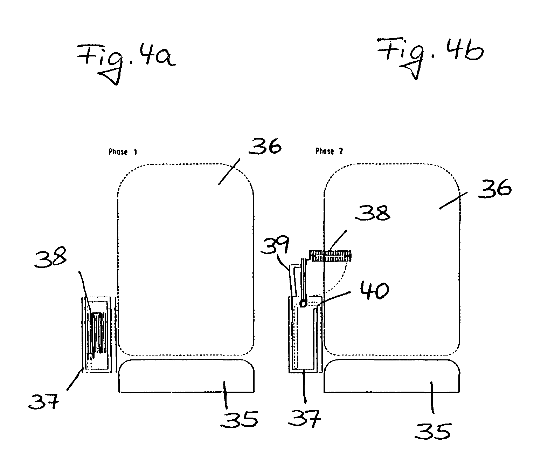

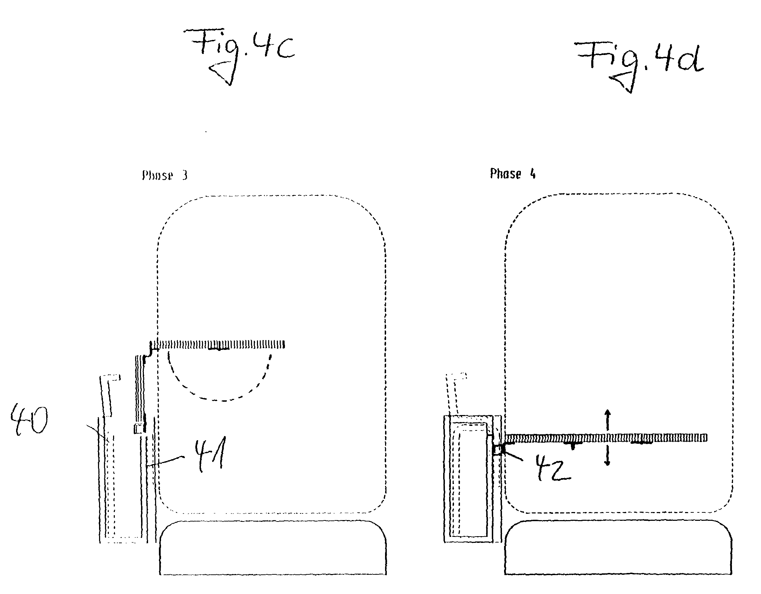

In Figur 4 a-d ist das Prinzipbild eines höhenverstellbaren Klapptisches nach der Erfindung dargestellt. Neben den Einzelsitzflächen 35 und den Lehnen 36 ist ein Staufach 37 angeordet, in das der Klapptisch 38 versenkbar ist (Figur 4a).

Zum Aufklappen wird zunächst ein Deckel 39 der Armlehne geöffnet und dann der zusammengelegte Klapptisch 38 entlang einer U-förmigen Führungsschiene 40 aus dem Innenbereich der Armlehne 38 herausgezogen (Figur 4b).

Da die U-förmige Führungsschiene 40 gemäß Ausführungsbeispiel auf dem Kopf steht, kann der ausgeklappt Tisch an dem außenliegenden Schenkel 41 abgesenkt und in einer variablen Höhe festgelegt werden. Die Festlegung der Höhe erfolgt vorzugsweise über eine Klemmmuffe 42 von Hand oder elektro-mechanisch.

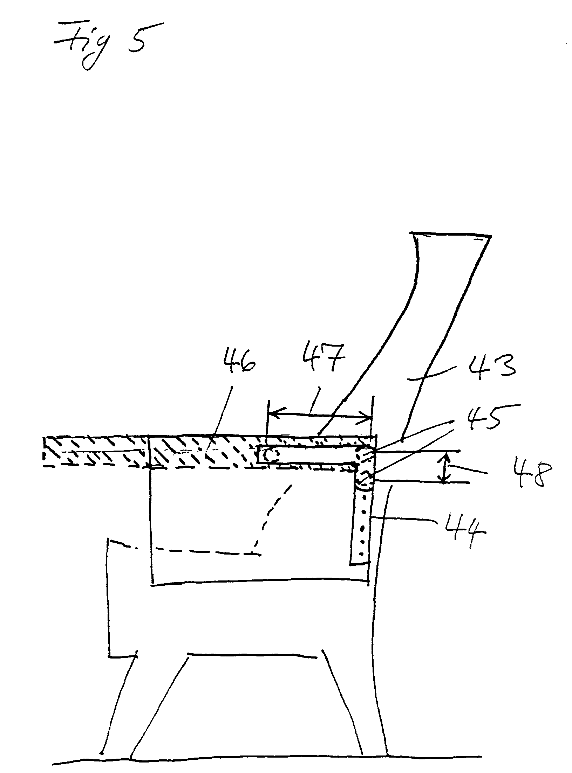

Die Seitenansicht eines mit einem horizontal verstellbaren Klapptisch ausgestatteten Komfortsitzes ist in Figur 5 dargestellt. An dem Komfortsitz 43 ist seitlich eine Kulisse 44 angebracht, in der ein Zapfen 45 des Klapptisches 46 geführt ist.

Wenn die Kulisse 44 - wie in Figur 5 dargestellt - winkelförmig angeordete Führungsflächen aufweist, so kann der Klapptisch 46 sowohl in horizontaler Richtung gemäß Pfeil 47 als auch in vertikaler Richtug gemäß Pfeil 48 verschoben werden. Der erfindungsgemäße Klapptisch ist somit individuell anpassbar an verschiedene Körpergrößen und -weiten und kann sowohl in der Höhe als auch in der Breite benutzergerecht eingestellt werden.

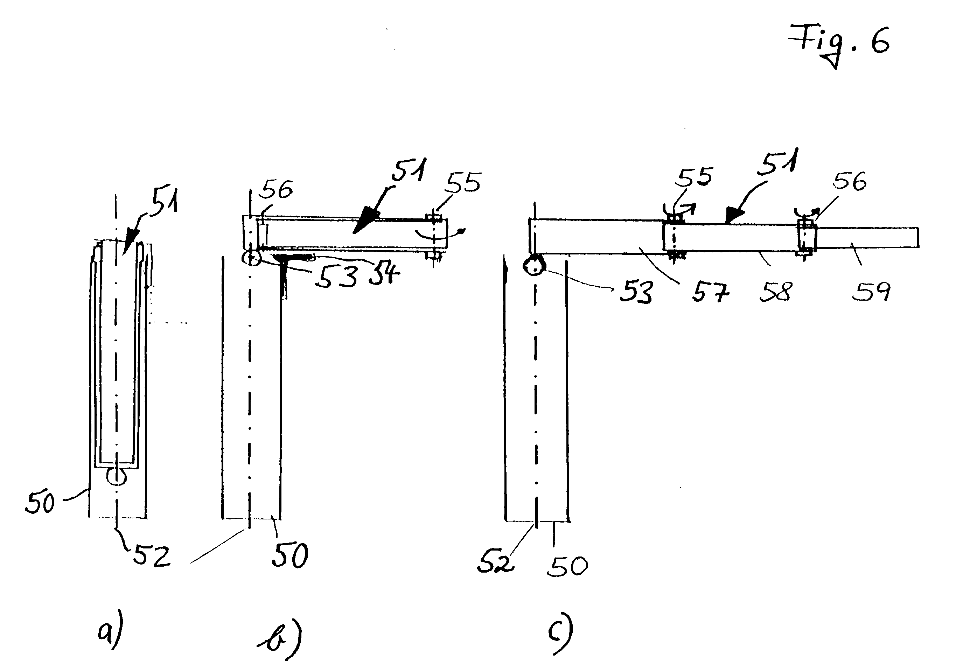

Figur 6 zeigt das Prinzipbild eines horizontal schwenkbaren Klapptisches gemäß der vorliegenden Erfindung. Im Falle der Benutzung wird der Klapptisch 51 entlang einer Vertikalachse 52 aus dem Staufach 50 manuell herausgeholt. Es ist aber auch möglich, das Herausheben des Klapptisches 51 über eine Mechanik-z.B. einen Spindelantrieb - zu bewirken.

In Position b der Figur 6 ist der Klapptisch bereits in eine horizontale Lage durch Schwenken um das Lager 53 gebracht worden. Die Abstützung in der horizontalen Position erfolgt beispielsweise über einen aufgeklappten Deckel 54, der in seiner Ruheposition als Armlehnenfläche dient. Um die Lager 55, 56 wird nunmehr der dreiteilige Klapptisch in horizontaler Richtung ausgeschwenkt, wobei die Segmentflächen 57, 58, 59 des Klapptisches 51 eine gemeinsame Auflagefläche bilden. Durch geschickte Ausformung der Segmentflächen z.B. durch Abrundungen der dem Benutzer zugewandten Kanten, kann der erfindungsgemäße Klapptisch den jeweiligen Körperformen angepasst werden.

## Patentansprüche

1. Versenkbarer Klapptisch für Fahrzeuge, insbesondere für Flugzeuge mit Komfortsitzen,
**dadurch gekennzeichnet,**
**daß** eine Armlehne als Staufach ausgebildet ist, in die der zusammengelegte Klapptisch versenkbar ist,
**daß** der Klapptisch aus mindestens drei miteinander über Gelenke verbundene Segmentflächen mit abgestufter Oberfläche besteht, die im ausgeklappten Zustand gemeinsam eine rechteckförmige Vertiefung in der Klapptischmitte zur Aufnahme eines Tabletts oder dergleichen bilden
und **daß** die Segmentflächen in ihrer horizontalen Lage gesichert werden.

2. Versenkbarer Klapptisch nach Anspruch 1,
**dadurch gekennzeichnet,**
**dass** die Sicherung mittels einer seitlich oder unterhalb des Klapptisches angeordeten ausklappbaren Teleskopschiene erfolgt.

3. Versenkbarer Klapptisch nach einem der vorhergehenden Ansprüche,
**dadurch gekennzeichnet,**
**dass** der Tisch über Luftdruck oder elektonisch aus der Armlehne ausklappbar ist.

4. Versenkbarer Klapptisch nach einem der vorhergehenden Ansprüche,
**dadurch gekennzeichnet,**
**dass** der Klapptisch in der horizontalen Ebene um einen Winkel schwenkbar ist.

5. Versenkbarer Klapptisch nach einem der vorhergehenden Ansprüche,
**dadurch gekennzeichnet,**
**daß** die Vertiefung in den Segmentflächen zwischen 1,5 und 3 mm beträgt und ein Federsegment aufweist, das sich dem jeweiligen Durchmesser eines in die Vertiefung aufgenommenen Tabletts, Bechers, Schälchens oder Glases anpaßt und dieses festklemmt.

6. Versenkbarer Klapptisch nach einem der vorhergehenden Ansprüche,
**dadurch gekennzeichnet,**
**dass** der Klapptisch im ausgeklappten Zustand in der Höhe verstellbar ausgebildet ist.

7. Versenkbarer Klapptisch nach einem der vorhergehenden Ansprüche,
**dadurch gekennzeichnet,**
**daß** am Rand mindestens einer Segmentfläche ein Haken oder eine Klammer zur Befestigung von Abfalltüten, Verpackungsresten oder dergleichen angeordnet ist.

8. Versenkbarer Klapptisch nach einem der vorhergehenden Ansprüche,
**dadurch gekennzeichnet,**
**daß** in den Segmentflächen zusätzliche Vertiefungen oder Aussparungen für Tassen, Gläser oder Bestecke eingearbeitet sind.

9. Versenkbarer Klapptisch nach einem der vorhergehenden Ansprüche,
**dadurch gekennzeichnet,**
**daß** die für das Ausfahren und Versenken des Klapptisches vorgesehenen mechanischen, hydraulischen, pneumatischen oder elektro-mechanischen Antriebsmittel im Rückenteil oder in der Sitzfläche des Komfortsitzes angeordet sind.

10. Versenkbarer Klapptisch nach einem der vorhergehenden Ansprüche,
**dadurch gekennzeichnet,**
**daß** in den Vertiefungen rutschfeste Einlagen aus Gummi, Kunststoff oder dergleichen angeordnet sind.

11. Versenkbarer Klapptisch nach einem der vorhergehenden Ansprüche,
**dadurch gekennzeichnet,**
**daß** der Haken oder die Klammer vom Rand der Segmentfläche ausziehbar, ausklappbar oder ausschwenkbar ist.

12. Versenkbarer Klapptisch nach einem der vorhergehenden Ansprüche,
**dadurch gekennzeichnet,**
**daß** in den Vertiefungen oder Aussparungen für Tassen, Gläser oder Bestecke zusammensteck- oder faltbare Spiralschläuche oder Ringelemente angeordnet sind, die nach unten verschlossen und abgedichtet sind.
